# FASCICULE DE BREVET EUROPEEN

(11) **EP 3 256 426 B1**
(45) Date de publication et mention de la délivrance du brevet: **20.05.2020**
(21) Numéro de dépôt: 16707844.3
(22) Date de dépôt: 28.01.2016
(51) Int. Cl.: C02F 1/56, B01D 21/01, B03D 3/02, B03D 3/06, C08L 33/26, C02F 103/10, C02F 103/12

(54) **PROCÉDÉ POUR LE TRAITEMENT DE SUSPENSIONS DE PARTICULES SOLIDES DANS L'EAU À L'AIDE DE POLYMÈRES AMPHOTÈRES**
VERFAHREN ZUR BEHANDLUNG VON WÄSSRIGEN SUSPENSIONEN FESTER PARTIKEL MIT AMPHOTEREN POLYMEREN
METHOD FOR TREATMENT OF SUSPENSIONS OF SOLID PARTICLES IN WATER WITH AMPHOTERIC POLYMERS

(30) Priorité: 12.02.2015 FR 1551153
(43) Date de publication de la demande: 20.12.2017
(73) Titulaire: S.P.C.M. SA, 42160 Andrézieux Bouthéon (FR)
(72) Inventeur: TIZZOTTI, Morgan, 69007 Lyon (FR)
(74) Mandataire: Cabinet Laurent & Charras
(86) Numéro de dépôt international: PCT/FR2016/050174
(87) Numéro de publication internationale: WO 2016/128638

(56) Documents cités:
- EP-A1- 0 082 571
- CA-A1- 2 682 542
- FR-A1- 2 879 606
- US-A1- 2007 287 815
- US-A1- 2014 319 070

## Description

### DOMAINE DE L'INVENTION

L'invention concerne un procédé de traitement d'une suspension de particules solides dans l'eau, telle que des résidus minéraux. Ce procédé comprend l'étape de mise en contact de la suspension de particules solides dans l'eau avec un polymère amphotère particulier, soluble dans l'eau. Plus précisément, le procédé consiste à ajouter ledit polymère amphotère dans un épaississeur contenant cette suspension à traiter et/ou pendant le transport de ladite suspension vers une zone de dépôt pour sa déshydratation et sa solidification ou à ajouter ledit polymère amphotère à ladite suspension puis à effectuer un traitement mécanique, tel qu'une centrifugation, un pressage ou une filtration.

### HISTORIQUE DE L'INVENTION

Les suspensions de particules solides dans l'eau comprennent tous les types de boues, de résidus ou de matériaux de rebut. Les suspensions peuvent résulter de la transformation de minerais. Il s'agit par exemple de boues ou de résidus industriels et de tous les produits de lavage et de rebut de mines résultant de l'exploitation minière, comme par exemple les mines de charbon, les mines de diamant, les mines de phosphate, les mines de métal (aluminium, platine, fer, or, cuivre, argent, etc....). Les suspensions peuvent également résulter de boues ou de résidus d'extraction dérivés du traitement de sable bitumineux. Ces suspensions de particules solides comprennent généralement des particules organiques et/ou minérales, telles que par exemple des argiles, des sédiments, du sable, des oxydes métalliques, du pétrole, etc.... mélangées avec de l'eau.

Le terme « suspension » est utilisé par la suite et se réfère aux suspensions de particules solides telles que décrites ci-dessus.

Le traitement de ces résidus et d'autres matériaux de rebut est devenu un problème technique, environnemental et d'ordre public.

L'utilisation de polymères synthétiques ou naturels, tels que des coagulants et des floculants, pour séparer les solides du liquide est une pratique courante.
Pendant longtemps, et même de nos jours, la boue minérale produite par des procédés de traitement physiques ou chimiques de minerais était stockée à ciel ouvert dans des bassins, des étangs, des barrages de rétention ou des remblais sous forme semi-liquide. Ces grands volumes de boue stockée créent par conséquent un véritable danger, en particulier si les digues lâchent.

Puisque les solutions de stockage traditionnelles sont manifestement dangereuses, de plus en plus de réglementations nationales ont été publiées, interdisant l'abandon de ces zones. Les réglementations appellent également à une obligation de remise en état de ces sites, c'est-à-dire le traitement et la consolidation des sols.

L'amélioration des traitements chimiques et mécaniques de résidus ou de boues est par conséquent un défi important.

Différentes tentatives ont été effectuées au cours des dernières décennies pour augmenter la vitesse de sédimentation des résidus afin de recycler de manière efficace l'eau et de réduire le volume des résidus. Les traitements physiques principaux comprennent la centrifugation, la filtration, l'électrophorèse et l'électrocoagulation.

D'autre part, des procédés chimiques émergent. Ils comprennent un procédé impliquant l'addition de produits chimiques, tels que le silicate de sodium, des floculants organiques, des coagulants inorganiques, des agents d'oxydation et de réduction et, plus récemment, le dioxyde de carbone.

En 1979-1980, Alsthom Atlantique et SNF (brevet US 4 347 140) ont mis au point un système de floculation à étapes multiples (superfloculation) spécifiquement conçu pour traiter des bassins de résidus d'argile provenant de la production de phosphates en Floride.

Le traitement de suspension a été étudié de manière continue : en 1986 selon le procédé décrit dans le document CA 1 273 888, puis en 1994 dans le document WO 96/05146, en 2000 dans le document CA 2 407 869 et en 2004 dans le document CA 1 515 581.

Dans le document CA 2 682 542, le procédé implique l'addition de polymères modifiés par copolymérisation et/ou ramification. Les polymères dotés de groupes hydrophobes, qui ont également été étudiés, ont montré une amélioration du traitement des suspensions. Des procédés similairs sont connus des documents FR 2 879 606 A1 et US 2014/319070 A1.

Malgré de grandes avancées au cours des dix dernières années, il existe toujours un besoin de mise au point de polymères qui permettent d'augmenter la vitesse et la quantité d'eau libérée à partir des suspensions. L'amélioration des caractéristiques physiques de la boue déshydratée produite est également recherchée.

### RESUME DE L'INVENTION

La présente invention répond aux besoins ci-dessus grâce à un procédé de traitement de suspensions de particules solides dans l'eau à l'aide de polymères amphotères particuliers, solubles dans l'eau.

Un polymère amphotère est un polymère qui comprend dans sa structure polymérique des fonctions anioniques apportant des charges négatives et des fonctions cationiques apportant des charges positives.

La revendication indépendante 1 comprend les caractéristiques essentielles de l'invention. Des autres modes de réalisations sont spécifiés dans les revendications dépendantes 2-14. L'invention concerne un procédé de traitement d'une suspension de particules solides dans l'eau, comprenant la mise en contact de ladite suspension avec un polymère soluble dans l'eau, ledit polymère étant amphotère et contenant une proportion faible et bien déterminée de monomère cationique.

Selon l'invention, on a trouvé de manière surprenante que l'utilisation de ces polymères améliore les performances des traitements de suspensions tels que :
- l'augmentation de la concentration des boues à la sortie d'un épaississeur ou
- l'étape de déshydratation et les étapes de séchage et de solidification des suspensions lorsque celles-ci sont déchargées sur le sol ou
- le traitement mécanique des suspensions traitées.

L'utilisation de ces polymères augmente le drainage, la libération de l'eau et la déshydratation générale des suspensions. Elle améliore également les propriétés mécaniques des matériaux obtenus après séparation de l'eau et la clarté du fluide aqueux libéré (également appelé liqueur), qui permet la réutilisation de l'eau clarifiée et sa mise à disposition immédiate pour la recirculation dans l'installation industrielle. La suspension traitée se solidifie beaucoup plus rapidement, ce qui entraîne des propriétés de boue sèche améliorées.

### DESCRIPTION DETAILLEE DE L'INVENTION

L'invention concerne un procédé pour traiter une suspension aqueuse de particules solides, selon lequel on ajoute à ladite suspension au moins un polymère soluble dans l'eau. Le procédé se caractérise en ce que ledit polymère comprend :
- au moins un monomère non ionique ;
- au moins un monomère anionique ;
- au moins un monomère cationique représentant entre 0,2 et 6 mol%.

Plus particulièrement, l'invention concerne un procédé de traitement d'une suspension aqueuse de particules solides contenant entre 5% et 60% en poids de particules solides par rapport au poids total de ladite suspension, provenant de l'extraction de minerais, comprenant les étapes suivantes :
- on prépare un polymère soluble dans l'eau comprenant :
   o au moins un monomère non ionique ;
   o au moins un monomère anionique ;
   o au moins un monomère cationique représentant entre 0,2 et 6 mol% ;
- on ajoute ledit polymère soluble dans l'eau à la suspension aqueuse de particules solides dans un épaississeur qui contient déjà la suspension à traiter, ou dans un tuyau transportant la suspension aqueuse de particules solides jusque vers un épaississeur ou dans un tuyau transportant la suspension aqueuse de particules solides vers une zone de dépôt sur laquelle la suspension traitée est répandue en vue de sa déshydratation et sa solidification.

De manière avantageuse, il s'agit du traitement d'une suspension aqueuse de particules solides minérales provenant de l'extraction de minerais.

Le au moins un monomère non ionique est choisi dans le groupe constitué par l'acrylamide ; le méthacrylamide ; les N-monodérivés de l'acrylamide; les N-monodérivés du méthacrylamide ; les N,N-dérivés de l'acrylamide; les N,N-dérivés du méthacrylamide ; les esters acryliques ; les esters méthacryliques ; le N-vinylformamide ; et la N-vinylpyrrolidone.

Le au moins un monomère anionique représente entre 10 et 70 mol%. Il est choisi dans le groupe constitué par les monomères présentant une fonction carboxylique et leurs sels ; les monomères présentant une fonction acide sulfonique et leurs sels ; les monomères présentant une fonction acide phosphonique et leurs sels.

Le au moins un monomère cationique est choisi dans le groupe comprenant le chlorure de diallyl diméthyl ammonium (DADMAC), le méthacrylamido-propyl triméthyl ammonium chlorure (MAPTAC) et l'acrylamido-propyl triméthyl ammonium chlorure (APTAC). Le DADMAC est particulièrement préféré.

De manière tout à fait surprenante, l'utilisation d'un polymère amphotère contenant une quantité faible et bien déterminée d'au moins un monomère cationique combiné avec au moins un monomère non ionique et au moins un monomère anionique permet le traitement efficace de suspensions de solides. C'est bien dans cette plage particulière de concentration en monomère cationique et uniquement dans cette plage, et pour ce type de polymère soluble dans l'eau comprenant également au moins un monomère non ionique et au moins un monomère anionique que l'amélioration du traitement des suspensions est significative.

Le ou les monomères cationiques peuvent être également choisis dans le groupe comprenant sels de diallyldialkyl ammonium comme le chlorure de diallyl diméthyl ammonium (DADMAC) ; les sels acidifiés ou quaternisés d'acrylates et méthacrylates de dialkylaminoalkyle, en particulier d'acrylate de dialkylaminoéthyle (ADAME) et de méthacrylate de dialkylaminoéthyle (MADAME) ; les sels acidifiés ou quaternisés de dialkyl-aminoalkylacrylamides, comme par exemple l'acrylamido-propyl triméthyl ammonium chlorure (APTAC) ; et les sels acidifiés ou quaternisés de dialkyl-aminoalkylméthacrylamides, comme par exemple le méthacrylamido-propyl triméthyl ammonium chlorure (MAPTAC).

Les sels acidifiés sont obtenus par les moyens connus de l'homme de métier, et notamment par protonation. Les sels quaternisés sont également obtenus par les moyens connus de l'homme du métier notamment, par réaction avec le chlorure de benzyle, le chlorure de méthyle (MeCl), les chlorures d'aryle, d'alkyle, ou les dialkylsulfates comme le diméthylsulfate.

Selon un mode de réalisation préféré, le monomère cationique est choisi parmi les sels de diallyldialkyl ammonium comme le chlorure de diallyl diméthyl ammonium (DADMAC) ; les sels acidifiés ou quaternisés de dialkyl- aminoalkylacrylamides ou méthacrylamides, comme par exemple le méthacrylamido-propyl triméthyl ammonium chlorure (MAPTAC), l'acrylamido-propyl triméthyl ammonium chlorure (APTAC). Sont particulièrement préférés le chlorure de diallyl diméthyl ammonium (DADMAC), le méthacrylamido-propyl triméthyl ammonium chlorure (MAPTAC) et l'acrylamido-propyl triméthyl ammonium chlorure (APTAC). Le DADMAC est encore plus particulièrement préféré.

Un ou plusieurs monomères cationiques peuvent être utilisés pour la fabrication du polymère amphotère selon l'invention.

La quantité totale de monomère cationique est comprise entre 0,2 et 6 mol%.

L'unité « mol% » correspond au pourcentage molaire de monomère (non ionique ou anionique ou cationique) rapporté au nombre total de moles de monomères utilisés pour fabriquer le polymère.

Selon un mode de réalisation préféré, la quantité totale de monomère cationique est supérieure ou égale à 0,5 mol%. Elle est également préférentiellement inférieure ou égale à 5 mol%.

Lorsque le monomère cationique unique est le DADMAC, sa quantité est préférentiellement comprise entre 1 et 5 mol%, préférentiellement entre 3 et 5 mol%.

Lorsque le monomère cationique unique est soit l'APTAC, soit le MAPTAC, sa quantité est préférentiellement comprise entre 0,5 et 3 mol%, préférentiellement entre 0,5 et 2 mol%.

Comme déjà indiqué, le ou les monomères non ioniques sont de préférence choisis dans le groupe constitué par l'acrylamide ; le méthacrylamide ; les N-monodérivés de l'acrylamide comme par exemple le N-isopropylacrylamide ; les N-monodérivés du méthacrylamide ; les N,N-dérivés de l'acrylamide comme par exemple le N,N-diméthylacrylamide ; les N,N-dérivés du méthacrylamide ; les esters acryliques ; les esters méthacryliques ; le N-vinylformamide ; et la N-vinylpyrrolidone. Le monomère non ionique particulièrement préféré est l'acrylamide.

Le polymère selon l'invention comprend préférentiellement une quantité de monomères non ioniques d'au moins 30 % en mole, de préférence d'au moins 45 % en mole.

Comme déjà indiqué, le ou les monomères anioniques sont de préférence choisis dans le groupe constitué par les monomères présentant une fonction carboxylique ; et leurs sels ; les monomères présentant une fonction acide sulfonique et leurs sels ; les monomères présentant une fonction acide phosphonique et leurs sels. Ils sont par exemple l'acide acrylique ; l'acide méthacrylique ; l'acide itaconique ; l'acide crotonique ; l'acide maléique ; l'acide fumarique ; l'acide 2-acrylamido-2-méthylpropanesulfonique ; l'acide vinylsulfonique ; l'acide vinylphosphonique ; l'acide allylsulfonique ; l'acide allylphosphonique ; l'acide styrènesulfonique ; et leurs sels solubles dans l'eau correspondant. Les sels solubles dans l'eau des monomères anioniques ci-dessus sont typiquement des sels d'un métal alcalin, d'un métal alcalinoterreux et d'ammonium. Les monomères anioniques particulièrement préférés sont l'acide acrylique, l'acide 2-acrylamido-2-méthylpropanesulfonique et leurs sels correspondants.

Le polymère selon l'invention comprend préférentiellement une quantité de monomères anioniques comprise entre 10 et 70 mol%, préférentiellement comprise entre 25 et 55 mol%.

Les monomères présentant un caractère hydrophobe peuvent également être utilisés dans la préparation du polymère soluble dans l'eau utilisé dans le procédé de l'invention. Ils sont de préférence choisis dans le groupe constitué par les esters de l'acide (méth)acrylique présentant une chaîne alkyle, arylalkyle ou éthoxylée ; les dérivés du (méth)acrylamide présentant une chaîne alkyle, arylalkyle ou dialkyle.

Lorsqu'on utilise un monomère présentant un caractère hydrophobe pour la préparation du polymère soluble dans l'eau, sa quantité se situe avantageusement dans la plage comprise entre 0,001 et 3 % en mole par rapport à la quantité totale de monomères.

Le poids moléculaire du polymère selon l'invention est de préférence compris entre 3 et 40 millions g/mol et plus préférentiellement entre 5 et 30 millions g/mol.

Le polymère soluble dans l'eau peut également être ramifié. La ramification peut de préférence être effectuée pendant la polymérisation des monomères en présence d'un agent de ramification/réticulation ou éventuellement d'un agent de transfert polyfonctionnel. Une liste non exhaustive d'agents de ramification/réticulation comprend : le méthylène-bis-acrylamide (MBA) ; le diacrylate d'éthylène glycol ; le diméthacrylate de polyéthylène glycol ; l'acrylate de vinyloxyéthyle ; le méthacrylate de vinyloxyéthyle ; la triallylamine, le glyoxal ; les composés de type glycidyléther tels que l'éthylène glycol diglycidyléther ; les composés présentant au moins une fonction époxy ; le trimercaptotriazine, les polyvinyl alcools, les polyvinylamines.

La quantité d'agent de ramification/réticulation dans le mélange de monomères est inférieure à 4 % en poids par rapport à la teneur en monomères.

Le procédé de polymérisation peut être effectué selon l'une quelconque des techniques de polymérisation bien connues par l'homme du métier : la polymérisation en solution, la polymérisation en suspension, la polymérisation en gel, la polymérisation par précipitation, la polymérisation en émulsion (aqueuse ou inversée) suivie ou non par une étape de séchage par pulvérisation, la polymérisation en suspension, la polymérisation micellaire suivie ou non d'une étape de précipitation. Une post-hydrolyse ou une co-hydrolyse du polymère de l'invention est possible comme cela est connu de l'homme du métier.

La polymérisation est généralement une polymérisation à radicaux libres de préférence par polymérisation en émulsion inverse ou par polymérisation en gel. Par polymérisation par radicaux libres, nous incluons la polymérisation par radicaux libres au moyen d'initiateurs UV, azoïques, redox ou thermiques ainsi que les techniques de polymérisation radicalaire contrôlée (CRP) ou les techniques de polymérisation sur matrice.

Comme déjà mentionné, l'invention concerne un procédé de traitement de suspensions de particules solides dans l'eau. Il implique le mélange de la suspension avec le polymère soluble dans l'eau de l'invention.

Un tel traitement peut être effectué dans un épaississeur, qui est une zone de retenue, généralement de la forme d'une section de tube d'un diamètre de plusieurs mètres avec un fond conique dans lequel les particules peuvent sédimenter. Selon un mode de réalisation spécifique, on transporte au moyen d'un tuyau la suspension aqueuse jusque vers un épaississeur, on ajoute le polymère dans ledit tuyau.

Selon un autre mode de réalisation spécifique, le polymère est ajouté dans un épaississeur qui contient déjà la suspension à traiter. Dans une opération de traitement minéral typique, les suspensions sont souvent concentrées dans un épaississeur. Cela conduit à obtenir une boue de densité plus élevée qui sort par le bas de l'épaississeur, et un fluide aqueux libéré de la suspension traitée (appelé liqueur) qui sort par surverse, par le haut de l'épaississeur. L'addition du polymère augmente la concentration de la boue et augmente la clarté de la liqueur.

Selon un autre mode de réalisation spécifique, le polymère est ajouté à la suspension de particules pendant le transport de ladite suspension vers une zone de dépôt. Dans ce cas, le polymère est ajouté dans le tuyau qui transporte ladite suspension vers une zone de dépôt. C'est sur cette zone de dépôt que la suspension traitée est répandue en vue de sa déshydratation et sa solidification. Les zones de dépôt peuvent être non fermées, comme par exemple une étendue de sol non délimitée, ou fermées comme par exemple un bassin, une cellule.

Un exemple de ces traitements pendant le transport de la suspension est l'épandage de la suspension traitée avec le polymère selon l'invention sur le sol en vue de sa déshydratation et sa solidification puis l'épandage d'une deuxième couche de suspension traitée sur la première couche solidifiée. Un autre exemple est l'épandage continue de la suspension traitée avec le polymère selon l'invention de telle sorte que la suspension traitée tombe en continue sur la suspension préalablement déchargée dans la zone de dépôt, formant ainsi un amas de matériaux traité dont l'eau s'extrait.

Selon un autre mode de réalisation spécifique, le polymère soluble dans l'eau est ajouté à la suspension, puis un traitement mécanique est effectué, tel qu'une centrifugation, un pressage ou une filtration.

Le polymère soluble dans l'eau peut être ajouté simultanément dans différents étages du traitement de la suspension, c'est-à-dire par exemple dans le tuyau transportant la suspension vers un épaississeur et dans la boue sortant de l'épaississeur qui sera conduite soit vers une zone de dépôt, soit vers un appareil de traitement mécanique.

Le polymère peut être ajouté sous forme liquide ou sous forme solide. Le polymère peut être ajouté sous forme d'une émulsion, (eau dans huile), d'une suspension, d'une poudre ou d'une dispersion du polymère dans de l'huile. Le polymère est de préférence ajouté sous la forme d'une solution aqueuse.

Lorsque le polymère est sous forme solide, il peut être partiellement ou totalement dissous dans l'eau à l'aide d'une unité de préparation de polymère comme le Polymer Slicing Unit (Unité de tranchage de polymère - PSU) divulgué dans le document EP 2 203 245.

Selon un autre mode de réalisation spécifique, le polymère soluble dans l'eau est ajouté à la suspension en combinaison avec un autre polymère, synthétique ou naturel. Ces polymères peuvent être ajoutés simultanément ou séparément. L'autre polymère peut être soluble dans l'eau ou gonflable dans l'eau. Il peut s'agir d'un dispersant, d'un coagulant ou d'un floculant.

Selon un autre mode de réalisation spécifique, le polymère selon l'invention est ajouté à la suspension en combinaison avec un sel tel que des sels de calcium et/ou de magnésium. Le polymère et le sel peuvent être ajoutés simultanément ou séparément. Les sels peuvent être inorganiques ou organiques. Des sels appropriés comprennent le chlorure de calcium, l'acétate de calcium, le sulfate de calcium, le nitrate de calcium, l'hydroxyde de calcium, le carbonate de calcium, le chlorure de magnésium, l'acétate de magnésium, le sulfate de magnésium, le nitrate de magnésium, l'hydroxyde de magnésium, le carbonate de magnésium, le formiate de calcium, le gluconate de calcium, le propionate de calcium, le phosphate tricalcique et le succinate de calcium.

Selon l'invention, la quantité (dosage) de polymère ajoutée est comprise entre 50 et 5000 g par tonne de solides secs de la suspension, de préférence entre 250 et 2000 g/t et plus préférablement entre 500 et 1500 g/t, en fonction de la nature et de la composition des suspensions à traiter.

Selon l'invention, le procédé utilisant le polymère décrit dans l'invention permet de traiter efficacement une suspension de particules solides et plus particulièrement de particules minérales.

Les suspensions de particules solides dans l'eau comprennent tous les types de boues, de résidus ou de matériaux de rebut. Les suspensions proviennent de l'extraction de minerais et se présentent sous la forme de suspensions de particules minérales. Elles peuvent par exemple correspondre à des boues ou des résidus industriels et tous les produits de lavage et de rebut de mines provenant de l'exploitation minière, comme par exemple les mines de charbon, les mines de diamant, les mines de phosphate, les mines de métal (aluminium, platine, fer, or, cuivre, argent, etc....). Les suspensions peuvent également provenir de l'extraction de sable bitumeux, par exemple des boues ou des résidus d'extraction dérivés du traitement de sable bitumineux. Ces suspensions comprennent généralement des particules organiques et/ou minérales, telles que par exemple des argiles, des sédiments, du sable, des oxydes métalliques, du pétrole, etc.... mélangées avec de l'eau.

Les suspensions de particules solides sont concentrées et contiennent entre 5 % et 60 % en poids de solides, de préférence entre 20 et 50 % en poids de solides, par rapport au poids total desdites suspensions.

Le procédé selon l'invention est particulièrement utile pour le traitement de résidus provenant de l'extraction de sable bitumineux : des résidus dits « fins » ou « fines tailings », c'est-à-dire contenant une grande quantité d'argiles, et pour le traitement de résidus fins dits « mûrs », les Mature Fine Tailings (MFT), c'est-à-dire ces mêmes résidus fins après quelques années de sédimentation, et contenant une quantité encore plus importante d'argiles. Le procédé selon l'invention peut également être utilisé pour traiter des résidus dits « frais », c'est-à-dire sortant directement de l'opération de séparation du bitume et du sol dont il est extrait.

Selon un mode de réalisation particulier de l'invention, la suspension aqueuse de particules solides est un résidu fin dit « mûr », c'est-à-dire un Mature Fine Tailing (MFT), issu de l'extraction de sable bitumineux.

Le traitement de résidus de sable bitumineux est devenu récemment un problème croissant au Canada. Les rebuts de résidus sont envoyés vers des étangs de résidus ou des épaississeurs pour la gestion ultérieure de l'eau. Les résidus de sables bitumineux sont des suspensions aqueuses alcalines qui contiennent du bitume résiduel non récupéré, des sels, des composés organiques solubles, des sables et des argiles. Les résidus sont évacués vers des étangs de résidus pour le stockage.

Les étangs de résidus sont étroitement réglementés par le gouvernement canadien. Il faut deux à quatre barils d'eau par baril de pétrole produit par le procédé d'exploitation des sables bitumineux. Lorsque la suspension de résidus est évacuée vers les étangs de résidus, les particules solides grossières telles que le sable se séparent par gravité alors que l'eau et les particules solides fines, telles que les argiles restent sous forme de suspensions dans le bassin de résidus. Une couche de résidus fins mûrs (MFT) se développe après deux à trois années. Les MFT se consolident très lentement. On estime que le procédé de sédimentation complet sans aucun traitement dure quasiment un siècle.

L'utilisation du polymère décrit dans l'invention permet de traiter les MFT en quelques jours seulement. Ils permettent d'augmenter le drainage, la libération de l'eau et la déshydratation générale des MFT. Ils améliorent également les propriétés mécaniques des matériaux obtenus après séparation de l'eau et la clarté du fluide aqueux libéré (également appelé liqueur), qui permet la réutilisation de l'eau clarifiée et sa mise à disposition immédiate pour la recirculation dans l'installation industrielle typiquement pour l'étape de séparation du bitume du sol dont il est extrait.

Les exemples suivants ne sont donnés qu'à titre d'illustration de l'objet de l'invention, sans la limiter en aucune manière.

### EXEMPLE 1 - Préparation du polymère

Un réacteur de 1,5 l équipé d'un agitateur mécanique, d'un thermomètre et d'une arrivée d'azote est chargé d'eau distillée, d'acrylamide (AM), d'acide acrylique (AA) et de monomère cationique selon la composition suivante :
- Acrylamide : (70 - X)% molaire
- Acide Acrylique : 30% molaire
- Monomère cationique : X% molaire

Différents monomères cationiques ont été testés, et pour chacun d'entre eux on a fait varier leur concentration X.

Le mélange obtenu est homogénéisé puis refroidi, neutralisé avec de l'hydroxyde de sodium jusqu'à pH = 7,6-7,7 et enfin dégazé sous un flux d'azote. La polymérisation est ensuite initiée à l'aide d'un système redox (initiateur). Le gel résultant, obtenu après polymérisation est ensuite broyé et séché dans un four de séchage de manière à obtenir une poudre.

Les différents polymères préparés sont tous des polymères hydrosolubles de haut poids moléculaires compris entre 10 et 12 millions de g/mol. Ils sont listés dans le tableau 1 ci-dessous :

**Tableau 1 : Nature et concentration en monomère cationique par polymère**

| Polymère | Monomère cationique | Mol% |
|---|---|---|
| X | aucun | 0 |
| A | APTAC | 0.5 |
| B | APTAC | 1 |
| C | APTAC | 1.5 |
| D | APTAC | 2 |
| E | APTAC | 3 |
| F | APTAC | 5 |
| G | APTAC | 7.5 |
| H | MAPTAC | 0.5 |
| I | MAPTAC | 1 |
| J | MAPTAC | 1.5 |
| K | MAPTAC | 2 |
| L | MAPTAC | 3 |
| M | MAPTAC | 5 |
| N | MAPTAC | 7.5 |
| O | DADMAC | 0.5 |
| P | DADMAC | 1 |
| Q | DADMAC | 1.5 |
| R | DADMAC | 2 |
| s | DADMAC | 3 |
| T | DADMAC | 5 |
| U | DADMAC | 7.5 |

| | | |
|---|---|---|
| APTAC : acrylamido-propyl triméthyl ammonium chlorure MAPTAC : méthacrylamido-propyl triméthyl ammonium chlorure DADMAC : chlorure de diallyl diméthyl ammonium | | |

### EXEMPLE 2 - Floculation de la boue 1 (MFT 1).

Les polymères X et A à U sont dissous dans de l'eau du robinet afin d'obtenir des solutions aqueuses présentant une concentration de 0,4 % en poids de polymère par rapport au poids total de la solution. Toutes ces solutions sont agitées mécaniquement à 500 t/min jusqu'à la solubilisation complète des polymères et l'obtention de solutions claires et homogènes.

Les tests de floculation sont effectués sur une suspension de résidus fins mûrs (MFT) issus de l'extraction des sables bitumineux présentant une teneur en solides de 33,7 % en poids.

Pour chaque test, le volume approprié de solution de polymère est ajouté dans 200 g de MFT puis le mélange complet est mélangé manuellement jusqu'à ce qu'on observe une floculation et une libération d'eau optimum. Les résultats sont récapitulés dans le tableau 2 ci-dessous :

**Tableau 2 - Performances des polymères A à U en termes de libération nette de l'eau dans le MFT 1.**

| | | Eau libérée (ml) | | | |
|---|---|---|---|---|---|
| Polymère | Dosage de polymère (kg/tonne sèche) | 30 min | 1h | 24 h | LNE 24h |
| X | 1.14 | 12.9 | 15.6 | 22 | 2 |
| A | 1.14 | 19 | 22.2 | 28.6 | 8.6 |
| B | 1.19 | 19.3 | 22.9 | 29.9 | 8.9 |
| C | 1.31 | 18.6 | 23.4 | 32.3 | 9.3 |
| D | 1.42 | 19.1 | 23.4 | 32.3 | 9.3 |
| E | 1.65 | 24.6 | 29.3 | 34.9 | 5.9 |
| F | 2.16 | 28.7 | 34.8 | 43 | 5 |
| G | Aucune floculation quel que soit le dosage | | | | |
| H | 1.14 | 17.8 | 22.9 | 27.2 | 7.2 |
| I | 1.14 | 18.8 | 23.1 | 28.2 | 8.2 |
| J | 1.19 | 15.4 | 21.2 | 27.6 | 6.6 |
| K | 1.31 | 19.2 | 24.0 | 29.4 | 6.4 |
| L | 1.42 | 20.6 | 25.5 | 31.4 | 6.4 |
| M | 1.76 | 22.5 | 28.3 | 36.3 | 5.3 |
| N | 3.70 | 56.3 | 61.2 | 66.5 | 1.5 |
| O | 1.14 | 13.2 | 17.3 | 25 | 5 |
| P | 1.14 | 17.1 | 20.9 | 28.7 | 8.7 |
| Q | 1.19 | 18.7 | 22.8 | 30.4 | 9.4 |
| R | 1.19 | 19.9 | 23.3 | 28.8 | 7.8 |
| S | 1.31 | 25.3 | 29 | 35.1 | 12.1 |
| T | 1.48 | 26.7 | 30.9 | 37.6 | 11.6 |
| U | 1.99 | 27.9 | 32.7 | 40.8 | 5.8 |

| | | | | | |
|---|---|---|---|---|---|
| LNE = Libération Nette de l'Eau. Elle correspond à la quantité totale d'eau récupérée pendant le test de floculation moins la quantité d'eau indument ajoutée lors de l'incorporation de la solution aqueuse polymérique dans la suspension. | | | | | |

Les résultats de ces expériences montrent bien que la présence dans le polymère amphotère de 0.5 mol% de monomère MAPTAC, ou APTAC ou DADMAC permet d'améliorer la quantité d'eau libérée par rapport au polymère anionique X. Cette performance est amélioré en augmentant encore la quantité de monomère cationique, et ce jusqu'à une certaine concentration comprise entre 6 et 7 mol%, au-delà de laquelle les performances diminuent de manière importante. Un dosage trop important de polymère peut être problématique pour une application industrielle pour laquelle l'utilisateur souhaitera optimiser sa consommation en polymère.

### EXEMPLE 3 - Floculation de la boue 2 (MFT 2).

Les polymères X et A à U sont dissous dans de l'eau du robinet afin d'obtenir des solutions aqueuses présentant une concentration de 0,4 % en poids de polymère par rapport au poids total de la solution. Toutes ces solutions sont agitées mécaniquement à 500 t/min jusqu'à la solubilisation complète des polymères et l'obtention de solutions claires et homogènes.

Les tests de floculation sont effectués sur une deuxième suspension de résidus fins mûrs (MFT) issus de l'extraction des sables bitumineux présentant une teneur en solides de 35,1 % en poids.

Pour chaque test, le volume approprié de solution de polymère est ajouté dans 200 g de MFT puis le mélange complet est mélangé manuellement jusqu'à ce qu'on observe une floculation et une libération d'eau optimisée.

Les résultats sont récapitulés dans le tableau 3 ci-dessous :

**Tableau 3 - Performances des polymères A à U en termes de libération nette de l'eau dans le MFT 2.**

| | | Eau libérée (ml) | | | |
|---|---|---|---|---|---|
| Polymère | Dosage de polymère (kg/tonne sèche) | 30 min | 1h | 24 h | LNE 24h |
| X | 1.06 | 10.8 | 15 | 22.2 | 2.2 |
| A | 1.06 | 14.8 | 19.9 | 26.7 | 6.7 |
| B | 1.11 | 17.2 | 21.4 | 30.1 | 9.1 |
| C | 1.16 | 15.5 | 20.8 | 29.4 | 7.4 |
| D | 1.27 | 19.8 | 25.5 | 32.3 | 8.3 |
| E | 1.43 | 23.0 | 29.6 | 36.1 | 9.1 |
| F | 1.80 | 22.4 | 29.4 | 37.5 | 3.5 |
| G | Aucune floculation quel que soit le dosage | | | | |
| H | 1.11 | 16.1 | 20.4 | 26.9 | 5.9 |
| I | 1.11 | 16.4 | 19.9 | 26.8 | 5.8 |
| J | 1.16 | 14.8 | 22.0 | 28.2 | 6.2 |
| K | 1.22 | 15.3 | 21.3 | 30.4 | 7.4 |
| L | 1.37 | 19.7 | 25.1 | 33.5 | 7.5 |
| M | 1.80 | 22.9 | 35.2 | 37.8 | 3.8 |
| N | 3.81 | 54.6 | 63.8 | 73.1 | 1.1 |
| O | 1.00 | 13.0 | 17.8 | 26.6 | 7.6 |
| P | 1.06 | 13.5 | 19.2 | 28.0 | 8.0 |
| Q | 1.06 | 14.8 | 18.9 | 28.3 | 8.3 |
| R | 1.11 | 16.4 | 20.7 | 29.7 | 8.7 |
| S | 1.16 | 15.8 | 21.0 | 29.2 | 7.2 |
| T | 1.37 | 19.7 | 28.0 | 34.6 | 8.6 |
| U | 1.85 | 25.4 | 29.5 | 39.1 | 4.1 |

Les résultats de ces expériences montrent pour une deuxième suspension de type MFT, la présence dans le polymère amphotère de 0.5 mol% de monomère MAPTAC, ou APTAC ou DADMAC permet d'améliorer la quantité d'eau libérée par rapport au polymère anionique X. Cette performance est amélioré en augmentant encore la quantité de monomère cationique, et ce jusqu'à une certaine concentration comprise entre 6 et 7 mol%, au-delà de laquelle les performances diminuent de manière importante.

## Revendications

1. Procédé de traitement d'une suspension aqueuse de particules solides minérales contenant entre 5% et 60% en poids de solides par rapport au poids total de ladite suspension, provenant de l'extraction de minerais, comprenant les étapes suivantes :
- on prépare un polymère soluble dans l'eau comprenant :
o au moins un monomère non ionique, choisi dans le groupe constitué par l'acrylamide ; le méthacrylamide ; les N-monodérivés de l'acrylamide ; les N-monodérivés du méthacrylamide ; les N,N-dérivés de l'acrylamide ; les N,N-dérivés du méthacrylamide ; les esters acryliques ; les esters méthacryliques ; le N-vinylformamide ; et la N-vinylpyrrolidone ;
o au moins un monomère anionique représentant entre 10 et 70 mol%, choisi dans le groupe constitué par les monomères présentant une fonction carboxylique et leurs sels ; les monomères présentant une fonction acide sulfonique et leurs sels ; les monomères présentant une fonction acide phosphonique et leurs sels ;
∘ au moins un monomère cationique représentant entre 0,2 et 6 mol%, choisi dans le groupe comprenant le chlorure de diallyl diméthyl ammonium, le méthacrylamido-propyl triméthyl ammonium chlorure et l'acrylamido-propyl triméthyl ammonium chlorure ;
- on ajoute ledit polymère soluble dans l'eau à la suspension aqueuse de particules solides dans un épaississeur qui contient déjà la suspension à traiter, ou dans un tuyau transportant la suspension aqueuse de particules solides jusque vers un épaississeur ou dans un tuyau transportant la suspension aqueuse de particules solides vers une zone de dépôt sur laquelle la suspension traitée est répandue en vue de sa déshydratation et sa solidification.

2. Procédé selon la revendication 1, **caractérisé en ce que** la quantité de monomère cationique est comprise entre 0.5 et 5 mol%.

3. Procédé selon la revendication 1 ou 2, **caractérisé en ce que** le monomère cationique est le chlorure de diallyl diméthyl ammonium.

4. Procédé selon l'une des revendications 1 à 3, **caractérisé en ce que** le polymère comprend une quantité de monomères non ioniques d'au moins 30 % en mole.

5. Procédé selon l'une des revendications 1 à 4, **caractérisé en ce que** le polymère a un poids moléculaire compris entre 3 et 40 millions g/mol.

6. Procédé selon l'une des revendications 1 à 5, **caractérisé en ce qu'**on ajoute une quantité de polymère comprise entre 50 et 5000 g par tonne de solides secs de la suspension.

7. Procédé selon l'une des revendications 1 à 6, **caractérisé en ce que** la suspension aqueuse de particules solides provient de l'extraction de sable bitumineux.

8. Procédé selon l'une des revendications 1 à 7, **caractérisé en ce que** la suspension est un MFT provenant de l'extraction de sable bitumineux.

9. Procédé selon l'une des revendications 1 à 8, **caractérisé en ce que** le polymère comprend un monomère cationique unique, le chlorure de diallyl diméthyl ammonium représentant entre 1 et 5 mol%.

10. Procédé selon la revendication 1, **caractérisé en ce que** le polymère comprend un cationique unique, l'acrylamido-propyl triméthyl ammonium chlorure représentant entre 0,5 et 3 mol%.

11. Procédé selon la revendication 1, **caractérisé en ce que** le polymère comprend un cationique unique, le méthacrylamido-propyl triméthyl ammonium chlorure représentant entre 0,5 et 3 mol%.

12. Procédé selon l'une des revendications 1 à 11, **caractérisé en ce que** le monomère non ionique du polymère est l'acrylamide représentant au moins 45 mol%.

13. Procédé selon l'une des revendications 1 à 12, **caractérisé en ce que** le monomère anionique du polymère est choisi dans le groupe comprenant l'acide acrylique ; l'acide méthacrylique ; l'acide itaconique ; l'acide crotonique ; l'acide maléique ; l'acide fumarique ; l'acide 2-acrylamido-2-méthylpropanesulfonique ; l'acide vinylsulfonique, l'acide vinylphosphonique ; l'acide allylsulfonique; l'acide allylphosphonique ; l'acide styrènesulfonique ; et leurs sels solubles dans l'eau.

14. Procédé selon l'une des revendications 1 à 13, **caractérisé en ce que** la quantité de polymère ajoutée est comprise entre 250 et 2000 g par tonne de solides secs de la suspension aqueuse de particules solides minérales provenant de l'extraction de minerais.

## Patentansprüche

1. Verfahren zur Behandlung einer wässrigen Suspension fester mineralischer Partikel, die, bezogen auf das Gesamtgewicht dieser Suspension, zwischen 5% und 60 Gewichts-% Feststoffe enthält und die aus der Extraktion von Mineralerzen stammt, das die folgenden Schritt umfasst:
- es wird ein wasserlösliches Polymer hergestellt, das enthält:
o mindestens ein nicht- ionisches Monomer, ausgesucht aus der Gruppe bestehend aus Acrylamid; Methacrylamid, Acrylamid- N- Monoderivate, Methacrylamid- N-Monoderivate; Acrylamid- N,N- Derivate, Methacrylamid- N-N- Derivate, Acrylester; Methacrylester; N-Vinylformamid; sowie N- Vinylpyrrolidon;
o mindestens ein anionisches Monomer, das zwischen 10 und 70 mol% bildet, ausgesucht aus der Gruppe bestehend aus den Monomeren mit einer Carboxylfunktion und ihren Salzen; Monomeren mit einer Sulfonsäurefunktion und ihren Salzen und Monomeren mit einer Phosphonsäurefunktion und ihren Salzen;
o mindestens ein kationisches Monomer, das zwischen 0,2 und 6 mol%, bildet, ausgesucht aus der Gruppe bestehend aus Diallyl- dimethyl- ammoniumchlorid, Methacrylamido- propyl trimethyl-ammoniumchlorid und Acrylamido- propyl trimethyl-ammoniumchlorid;
- dieses wasserlösliche Polymer wird zur wässrigen Suspension fester Partikel in einem Eindicker hinzugegeben, der bereits die zu behandelnde Suspension enthält, oder in ein Rohr, der die wässrige Suspension fester Partikel bis zu einem Eindicker transportiert oder in ein Rohr, das die wässrige Suspension fester Partikel in eine Lagerzone transportiert, in der die behandelte Suspension verteilt wird um sich zu entwässern und sich zu verfestigen.

2. Verfahren gemäß Anspruch 1, **dadurch gekennzeichnet, dass** die Menge des kationischen Monomers zwischen 0.5 und 3 mol% liegt.

3. Verfahren gemäß Anspruch 1 oder 2, **dadurch gekennzeichnet, dass** es sich bei dem kationischen Monomer um Diallyl- dimethyl- ammoniumchlorid handelt.

4. Verfahren nach einem der Ansprüche 1 bis 3, **dadurch gekennzeichnet, dass** das Polymer eine Menge an nicht- ionischen Monomeren von mindestens 30 % in Mol enthält.

5. Verfahren nach einem der Ansprüche 1 bis 4, **dadurch gekennzeichnet, dass** das Polymer ein Molekulargewicht zwischen 3 und 40 Millionen g/mol hat.

6. Verfahren nach einem der Ansprüche 1 bis 5, **dadurch gekennzeichnet, dass** eine Polymermenge zwischen 50 und 5000 g pro Tonne trockener Feststoffe der Suspension hinzugefügt wird.

7. Verfahren nach einem der Ansprüche 1 bis 6, **dadurch gekennzeichnet, dass** die wässrige Suspension fester Partikel aus der Extraktion von Ölsand stammt.

8. Verfahren nach einem der Ansprüche 1 bis 7, **dadurch gekennzeichnet, dass** es sich bei der Suspension um ein MFT aus der Extraktion von Ölsand handelt.

9. Verfahren nach einem der Ansprüche 1 bis 8, **dadurch gekennzeichnet, dass** das Polymer ein einziges kationisches Monomer enthält, das Diallyl- dimethylammoniumchlorid bildet dabei zwischen 1 und 5 mol%.

10. Verfahren nach Anspruch 1, **dadurch gekennzeichnet, dass** das Polymer ein einziges kationisches Monomer enthält, das Acrylamido- propyl- trimethyl-ammoniumchlorid bildet dabei zwischen 0,5 und 3 mol%.

11. Verfahren nach Anspruch 1, **dadurch gekennzeichnet, dass** das Polymer ein einziges kationisches Monomer enthält, das Methacrylamido- propyl trimethyl-ammoniumchlorid bildet dabei zwischen 0,5 und 3 mol%.

12. Verfahren nach einem der Ansprüche 1 bis 11, **dadurch gekennzeichnet, dass** es sich bei dem nicht ionischen Monomer des Polymers um Acrylamid handelt, das mindestens 45 mol% darstellt.

13. Verfahren nach einem der Ansprüche 1 bis 12, **dadurch gekennzeichnet, dass** das anionische Monomer des Polymers ausgewählt wird aus der Gruppe mit Acrylsäure, Methacrylsäue, Itaconsäure, Crotonsäure, Maleinsäure, Fumarinsäure, 2-Acrylamido-2-Methylpropansulfonsäure, Vinylsulfonsäure, Vinylphosphonsäure, Allylsulfonsäure, Allylphosphonsäure, Styrolsulfonsäure und ihren wasserlöslichen Salzen.

14. Verfahren gemäß einem der Ansprüche 1 bis 13 **dadurch gekennzeichnet, dass** die Menge des zugegebenen Polymers zwischen 250 und 2000 g pro Tonne trockener Feststoffe der wässrigen Suspension fester mineralischer Partikel aus der Mineralerzgewinnung beträgt.

## Claims

1. Method for treating an aqueous suspension of solid mineral particles containing between 5% et 60% by weight of solids relative to the total weight of said suspensions, arising from the extraction of ores, comprising the following steps:
- we prepare a water-soluble polymer comprising:
∘ at least one non-ionic monomer selected from the group consisting of acrylamide; methacrylamide; N-monoderivatives of acrylamide; N-monoderivatives of methacrylamide; N,N-derivatives of acrylamide; N,N-derivatives of methacrylamide; acrylic esters; methacrylic esters; N-vinylformamide; and N-vinylpyrrolidone;
∘ at least one anionic monomer representing between 10 and 70 mol%, selected from the group consisting of monomers having a carboxylic functional group and salts thereof; monomers having a sulfonic acid functional group and salts thereof, monomers having a phosphonic acid functional group and salts thereof;
∘ at least one cationic monomer representing between 0.2 and 6 mol%, selected from the group comprising diallyldimethylammonium chloride, methacrylamido-propyl trimethyl ammonium chloride and acrylamidopropyl trimethyl ammonium chloride;
- we add said water-soluble polymer to the aqueous suspension of solid particles into a thickener that already contains the suspension to be treated, or into a pipe transporting the aqueous suspension of solid particles to a thickener or into a pipe transporting the aqueous suspension of solid particles to a depositing area on which the treated suspension is spread with a view to its dehydration and solidification.

2. Method according to claim 1, ***characterized* in that** the quantity of cationic monomer is between 0.5 and 5 mol%.

3. Method according to claim 1 or 2, ***characterized* in that** the cationic monomer is diallyldimethyl ammonium chloride.

4. Method according to one of claims 1 to 3, ***characterized* in that** the polymer comprises a quantity of non-ionic monomers of at least 30 mol%.

5. Method according to one of claims 1 to 4, ***characterized* in that** the polymer has a molecular weight of between 3 and 40 million g/mol.

6. Method according to one of claims 1 to 5, ***characterized* in that** a quantity of polymer is added of between 50 and 5000 g per ton of dry solids of suspension.

7. Method according to one of claims 1 to 6, ***characterized* in that** the aqueous suspension of solid particles results from the extraction of bituminous sand.

8. Method according to one of claims 1 to 7, ***characterized* in that** the suspension is MFT resulting from the extraction of bituminous sand.

9. Method according to one of claims 1 to 8, ***characterized* in that** the polymer comprises a single cationic monomer, diallyldimethyl ammonium chloride, representing between 1 and 5 mol%.

10. Method according to claim 1, ***characterized* in that** the polymer comprises a single cationic monomer, acrylamidopropyltrimethyl ammonium chloride, representing between 0.5 and 3 mol%.

11. Method according to claim 1, ***characterized* in that** the polymer comprises a single cationic monomer, methacrylamidopropyl trimethyl ammonium chloride, representing between 0.5 and 3 mol%.

12. Method according to one of claims 1 to 11, ***characterized* in that** the non-ionic monomer of the polymer is acrylamide representing at least 45 mol%.

13. Method according to one of claims 1 to 12, ***characterized* in that** the anionic monomer of the polymer is selected from the group comprising acrylic acid, methacrylic acid, itaconic acid, crotonic acid, maleic acid, fumaric acid, 2-acrylamido-2-methylpropanesulfonic acid, vinylsulfonic acid, vinylphosphonic acid, allylsulfonic acid, allylphosphonic acid, styrenesulfonic acid, and the water-soluble salts thereof.

14. Method according to one of claims 1 to 13, ***characterized* in that** the quantity of polymer added is between 250 and 2000 g per ton of dry solids of the aqueous suspension of particles arising from the extraction of ores.
